# EUROPEAN PATENT APPLICATION

(11) **EP 4 043 237 A1**
(43) Date of publication of application: **17.08.2022**
(21) Application number: 20873955.7
(22) Date of filing: 15.09.2020
(51) Int. Cl.: B60C 5/01, B60C 11/00

(54) **PNEUMATIC TIRE**

(30) Priority: 10.10.2019 JP 2019187044
(71) Applicant: Sumitomo Rubber Industries, Ltd., Kobe-shi, Hyogo 651-0072 (JP)
(72) Inventor: ANDO, Kanta, Kobe-shi, Hyogo 651-0072 (JP)
(74) Representative: TBK
(86) International application number: PCT/JP2020/034889
(87) International publication number: WO 2021/070578

(57) **Abstract**

To improve the recyclability, and to ensure the grip by suppressing a reduction in the ground contacting area even when a tread reinforcing component is eliminated. [Solving means] There are included a tire framework member 2 comprising bead portions 5, sidewall portions 6 and an under tread portion 7, and a ground contacting tread component disposed outside the under tread portion 7. The tire framework member 2 and the ground contacting tread component 3 are made of a resin material, and a tensile elastic modulus Ea of the ground contacting tread component 3 is smaller than a tensile elastic modulus Eb of the tire framework member 2. The tread thickness X2 at a tread edge Te is more than 1.2 times and less than 5.0 times the tread thickness X1 at the tire equator C.

## Description

### Technical Field

The present invention relates to a pneumatic tire in which a tire framework member is made of a resin material.

### Background of the art

Conventional pneumatic tires have secured tire basic characteristics by using vulcanized rubber and cord materials such as organic fibers and steel fibers. However, vulcanized rubber has a problem such that it is difficult to recycle the material.

In addition, the use of cord materials, especially carcass cords, has problems of complicating the manufacturing process and increasing manufacturing costs.

Therefore, Patent Document 1 below proposes a carcassless tire in which a tire framework member is made of a resin material.

The tire framework member comprises a pair of bead portions, a pair of side portions extending from the pair of bead portions, and a crown portion connecting the pair of side portions. And on the crown portion, a tread made of vulcanized rubber is disposed.

Patent Document 1: Japanese Patent No. 6138695

### Disclosure of the Invention

### Problems to be solved by the Invention

In the tire proposed above, however, there is a problem such that the material recyclability cannot be sufficiently improved because the tread is made of vulcanized rubber.

Further, a tread reinforcing component composed of a cord layer in which a reinforcing cord such as a steel cord is spirally wound is disposed between the crown portion and the tread.

Therefore, when manufacturing the tire, a step of winding a reinforcing cord on the outer peripheral surface of the tire framework member is required, which involves a problem of lowering production efficiency. In addition, recycling also requires a process for separating reinforcing cords, and there is room for improvement in life cycle assessment.

As a result of the research of the present inventor, however, if the tread reinforcing component is simply excluded, the tread surface rises on the tire equator side due to the internal pressure when inflated. As a result, there is a problem such that the ground contacting area is reduced and the required grip force cannot be secured.

A problem of the present invention is to provide a pneumatic tire which can improve the material recyclability and secure the grip force by suppressing the decrease in the ground contacting area even if a tread reinforcing component is not provided.

### Means for solving the Problems

The present invention is a pneumatic tire which comprises
a toroidal tire framework member comprising a pair of bead portions, a pair of sidewall portions and an under tread portion connecting the pair of sidewall portions, and
a ground contacting tread component disposed outside the under tread portion in the tire radial direction, wherein
the tire framework member and the ground contacting tread component are made of a resin material,
a tensile elastic modulus of the ground contacting tread component is smaller than a tensile elastic modulus of the tire framework member, and with respect to a tread thickness between the inner surface in the tire radial direction, of the under tread portion and the outer surface in the tire radial direction, of the ground contacting tread component, the tread thickness X2 at a tread edge is more than 1.2 times and less than 5.0 times the tread thickness X1 at the tire equator.

In the pneumatic tire according to the present invention, it is preferable that the tread thickness gradually increases from the tire equator to the tread edge.

In the pneumatic tire according to the present invention, it is preferable that the entire inner surface in the tire radial direction, of the ground contacting tread component is arranged so as to contact with the outer surface in the tire radial direction, of the under tread portion.

In the pneumatic tire according to the present invention, it is preferable that the resin material is a thermoplastic elastomer.

In the pneumatic tire according to the present invention, it is preferable that the tensile elastic modulus of the tire framework member is 60 to 200 MPa.

In the pneumatic tire according to the present invention, it is preferable that the tensile elastic modulus of the tire framework member is 100 to 170 MPa.

In the pneumatic tire according to the present invention, it is preferable that the tread thickness X2 is not less than 1.3 times the tread thickness X1.

In the pneumatic tire according to the present invention, it is preferable that the tread thickness X2 is not more than 4.5 times the tread thickness X1.

In the pneumatic tire according to the present invention, it is preferable that a thickness of the ground contacting tread component is not less than 1.0 times a thickness of the under tread portion.

In the present application, the tread edge means the outermost position in the tire axial direction where the tread surface contacts with the ground when a normal load is applied to the tire which is mounted on a normal rim and filled with a normal inner pressure.

The "normal rim" means a rim specified for the tire by a standard included in a standardization system on which the tire is based, for example, the "normal wheel rim" in JATMA, "Design Rim" in TRA, and "Measuring Rim" in ETRTO. The "normal inner pressure" means air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. But in the case of passenger car tires, it is 180 kPa.

The "normal load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

### Effects of the Invention

In the pneumatic tire of the present invention, the tire framework member and the ground contacting tread component are made of the resin material, and the tensile elastic modulus of the ground contacting tread component is set to be smaller than the tensile elastic modulus of the tire framework member.

This makes it possible to improve the material recyclability while improving the followability to the road surface.

Further, in the present invention, the tread thickness X2 at the tread edge is defined as being larger than 1.2 times and smaller than 5.0 times the tread thickness X1 at the tire equator.

Therefore, if the tread reinforcing component is eliminated, the rise of the tread surface on the tire equator side due to the internal pressure when inflated is offset by the tread thickness which is larger on the tread edge side, and the decrease in the ground contacting area is suppressed.

This makes it possible to secure the grip performance in combination with the above-mentioned followability to the road surface.

In this case, owing to the elimination of the tread reinforcing component, it becomes possible to improve the production efficiency, reduce the recycling work process, and improve the life cycle assessment.

### Brief description of the Drawings

[FIG. 1] a cross-sectional view showing an embodiment of a pneumatic tire of the present invention.
[FIG. 2] a cross-sectional view enlargedly showing the tread.
[FIG. 3] (a)-(c) are conceptual diagrams showing a method for manufacturing the pneumatic tire.

### Description of the signs

- 1: pneumatic tire
- 2: tire framework member
- 3: ground contacting tread component
- 3Si: inner surface in tire radial direction
- 3So: outer surface in tire radial direction
- 5: bead portion
- 6: sidewall portion
- 7: under tread portion
- 7Si: inner surface in tire radial direction
- 7So: outer surface in tire radial direction
- C: tire Equator
- Ea, Eb: tensile elastic modulus
- Te: tread edge

### Best mode for carrying out the Invention

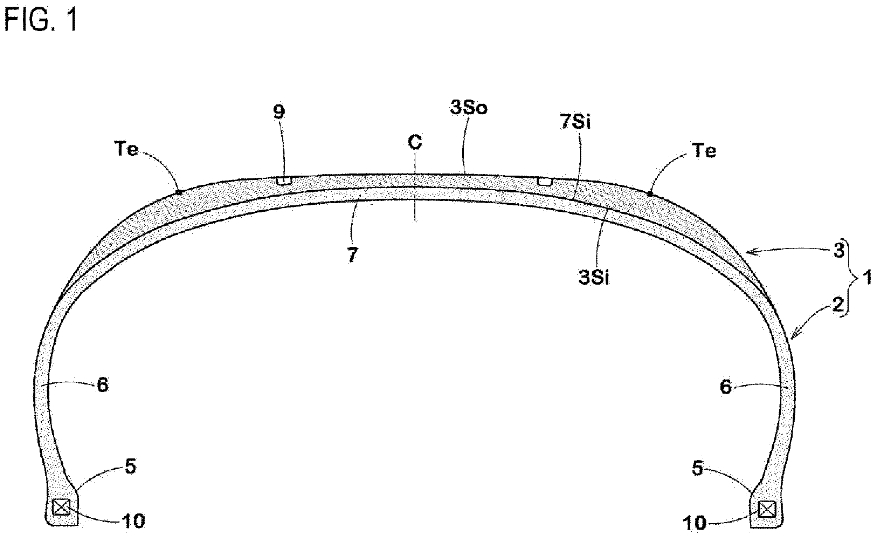

Hereinafter, embodiments of the present invention will be described in detail. As shown in FIG. 1, a pneumatic tire 1 of the present embodiment (hereinafter, may be simply referred to as the tire 1) is configured to include a toroidal tire framework member 2 made of a resin material, and a ground contacting tread component 3 made of a resin material.

In this example, there is shown a case where the pneumatic tire 1 is a tire for passenger cars. However, the present invention is not limited to this, and can be applied to tires of various categories such as for motorcycles, light trucks, large trucks and the like.

The tire framework member 2 comprises a pair of bead portions 5, a pair of sidewall portions 6 extending outwardly in the tire radial direction from the pair of bead portions 5, and an under tread portion 7 connecting the pair of sidewall portions 6.

The inner surface of the tire framework member 2 constitutes the tire inner cavity surface.

The bead portion 5 is a portion which fits onto a rim when mounted on the rim. In this example, an annular bead core 10 is disposed in the bead portion 5 in order to increase the fitting force with the rim in this example.

As the bead core 10, a tape bead structure and a single wind structure can be appropriately adopted.

In the tape bead structure, the bead core 10 is formed by spirally winding a band body which is an array of bead wires aligned parallel to each other and topped with a rubber or resin material, from the inside to the outside in the radial direction.

In the single wind structure, the bead core 10 is formed by continuously winding one bead wire in a spiral and multi-row multi-layer manner.

As the bead wire, a steel cord is preferably used, but an organic fiber cord may also be used.

Depending on the category of the tire and the like, it is also possible not to provide the bead core 10.

The sidewall portion 6 is a portion constituting the side portion of the tire 1, and extends outwardly in the tire radial direction while being curved in an arc shape which is convex toward the outside in the tire axial direction.

The under tread portion 7 is a portion that supports the ground contacting tread component 3, and connects between the outer ends in the tire radial direction, of the sidewall portions 6.

The ground contacting tread component 3 is disposed outside the under tread portion 7 in the tire radial direction.

In this example, the entire inner surface 3Si in the tire radial direction, of the ground contacting tread component 3 is in contact with the outer surface 7So in the tire radial direction, of the under tread portion 7.

That is, the ground contacting tread component 3 and the under tread portion 7 are joined without the tread reinforcing component arranged therebetween.

The ground contacting tread component 3 is a portion corresponding to a tread rubber, and in the tread surface which is the outer surface 3So in the tire radial direction, of the ground contacting tread component 3, tread grooves 9 for enhancing wet performance may be formed in various patterns.

In the present application, the "resin material" includes a thermoplastic resin (including a thermoplastic elastomer) and a thermosetting resin, and does not include rubber.

The "thermosetting resin" is a resin of which material is hardened by increasing the temperature, and examples include, for example, a phenol-based thermosetting resin, a urea-based thermosetting resin, a melamine-based thermosetting resin, an epoxy-based thermosetting resin and the like.

The "thermoplastic resin" means a polymer compound in which the material is softened and flowable as the temperature rises, and its condition becomes relatively hard and strong when cooled.

The "thermoplastic resin" includes a thermoplastic elastomer.

This "thermoplastic elastomer" has the characteristics such that the material is softened and flowable as the temperature rises, and when cooled, it becomes relatively hard and strong and has rubber-like elasticity.

Considering the elasticity required during running, the moldability at the time of manufacturing and the like, the resin material of the tire 1 is preferably a thermoplastic resin, and more preferably a thermoplastic elastomer.

Examples of the thermoplastic elastomer include polyamide-based thermoplastic elastomers, polyester-based thermoplastic elastomers, polyurethane-based thermoplastic elastomers, polystyrene-based thermoplastic elastomers and polyolefin-based thermoplastic elastomers, and it is possible to use alone or in combination.

In the tire 1 of the present embodiment, the tensile elastic modulus Ea of the resin material forming the ground contacting tread component 3 is set to be smaller than the tensile elastic modulus Eb of the resin material forming the tire framework member 2.

By setting Ea < Eb in this way, it is possible to improve the followability of the ground contacting tread component 3 to the road surface.

Further, as the tire framework member 2 and the ground contacting tread component 3 are each made of a resin material, it becomes possible to improve the material recyclability of the tire as compared with the tires using the conventional tread rubber.

It is preferable that the tensile elastic modulus Eb is 60 to 200 MPa.

When the tensile elastic modulus Eb is less than 60 MPa, the rigidity of the tire framework member 2 tends to be insufficient, and It becomes difficult to secure sufficient shape retention ability of the tire

On the contrary, if the tensile elastic modulus Eb exceeds 200 MPa, it becomes impossible to secure an excellent ride comfort.

From this point of view, the lower limit of the tensile elastic modulus Eb is more preferably not less than 100 MPa, and the upper limit is more preferably not more than 170 MPa.

The tire 1 does not include a tread reinforcing component, and the ground contacting tread component 3 and the under tread portion 7 are directly joined to each other.

In such tire 1, due to the internal pressure when inflated, the tread surface rises on the tire equator C side, and the contact area is decreased, and there is a tendency that the required grip force cannot be secured.

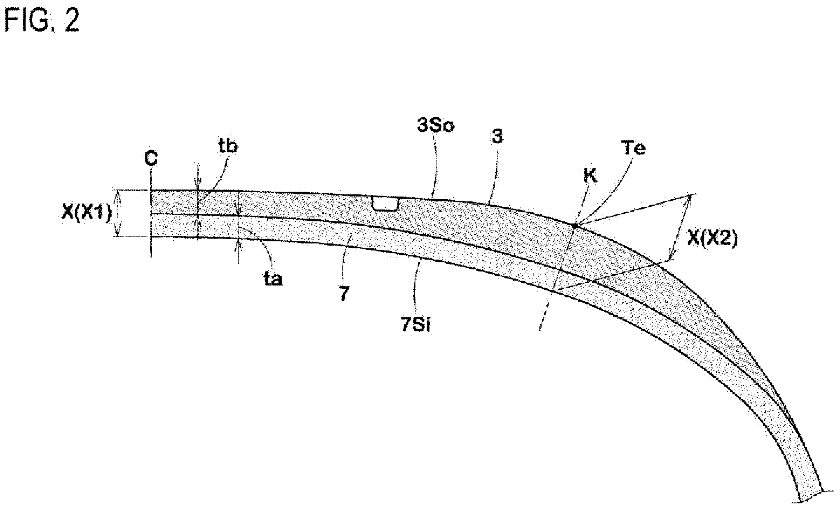

Therefore, as shown in FIG. 2, with respect to the tread thickness X between the inner surface 7Si in the tire radial direction, of the under tread portion 7 and the outer surface 3So in the tire radial direction, of the ground contacting tread component 3, the tread thickness X2 at the tread edge Te is defined as being more than 1.2 times and less than 5.0 times the tread thickness X1 at the tire equator C.

The tread thickness X2 at the tread edge Te is defined by the thickness along a reference line K which passes through the tread edge Te and is orthogonal to the inner surface 7Si in the tire radial direction, of the under tread portion 7. Further, the tread thickness X1 at the tire equator C is defined by the thickness at the tire equator C.

It is preferable that the tread thickness X is gradually increased from the tire equator C to the tread edge Te.

With this configuration, the rise of the tread on the tire equatorial side due to the internal pressure when inflated can be offset by the larger tread thickness on the tread edge Te side.

Thereby, the decrease in the contact area is suppressed, and, in combination with the above-mentioned followability to the road surface, it becomes possible to secure the grip performance required for running.

Further, by eliminating the tread reinforcing component, when manufacturing the tire, the step of winding the reinforcing cord on the under tread portion 7 becomes unnecessary, and the production efficiency can be improved.

Further, it becomes possible to reduce the recycling work process, for example, the process of separating the reinforcing cords becomes unnecessary when recycling, and it becomes possible to achieve the improvement in the life cycle assessment.

When the tread thickness X2 is not more than 1.2 times the tread thickness X1, the rise of the tread surface on the tire equator C side is still large, and it is difficult to secure a sufficient ground contacting area.

When the tread thickness X2 is not less than 5.0 times the tread thickness X1, the tread edge Te side becomes high, the tire equator C side cannot contact with the ground, and the ground contacting area becomes small.

From this point of view, the lower limit of the tread thickness X2 is preferably not less than 1.3 times, more preferably not less than 1.5 times the tread thickness X1, and the upper limit is not more than 4.5 times, preferably not more than 4.0 times the tread thickness X1.

The thickness ta of the under tread portion 7 is substantially constant at least in a range between the tread edges Te and Te, strictly speaking, in a range between the reference lines K and K.

Since the thickness tb of the ground contacting tread component 3 increases from the tire equator C to the tread edge Te, the tread thickness X increases from the tire equator C to the tread edge Te.

The "substantially constant" takes into account fluctuations of the thickness ta during manufacturing, and the ratio taₘₐₓ/taₘᵢₙ of the maximum value taₘₐₓ and the minimum value taₘᵢₙ is defined as being not more than 1.1.

The thickness tb of the ground contacting tread component 3 becomes a minimum thickness tbₘᵢₙ at the tire equator C.

It is preferable that the minimum thickness tbₘᵢₙ is not less than 1.0 times the thickness ta of the under tread portion 7.

Next, an example of the manufacturing method of the tire 1 of the embodiment will be illustrated.

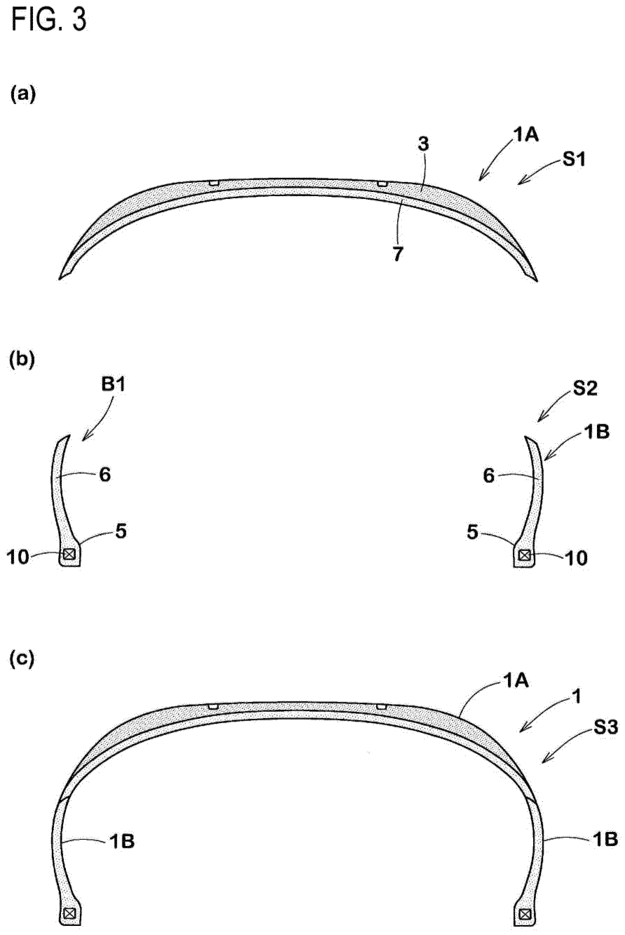

As conceptually shown in FIG. 3 (a) to (c), the manufacturing method of this example comprises
- step S1 of forming a first tire base 1A in which the under tread portion 7 and the ground contacting tread component 3 are integrated,
- step S2 of forming a second tire base 1B in which the sidewall portion 6, the bead portion 5 and the bead core 10 are integrated, and
- step S3 of forming the tire 1 by joining the first tire base 1A and the second tire base 1B.

In the step S1, a resin material for the tire framework member 2 and a resin material for the ground contacting tread component 3 are injected into a cavity to form the first tire base 1A.

In the step S2, after the bead core 10 is formed in advance, by injecting the resin material for the tire framework member 2 into the cavity in which the bead core 10 is set, the second tire base 1B is formed.

In the step S3, the first tire base 1A and the second tire base 1B are joined by thermal fusion bonding or using an adhesive.

As the adhesive, for example, Aron Alpha EXTRA2000 (registered trademark) manufactured by Toagosei Co., Ltd., Loctite 401J (registered trademark) manufactured by Henkel Japan Ltd., and the like are preferably used.

While detailed description has been made of an especially preferable embodiment of the present invention, the present invention can be embodied in various forms without being limited to the illustrated embodiment.

### Embodiments

In order to confirm the effects of the present invention, tires (195/65R15) for passenger cars having the structure shown in FIG. 1 were experimentally manufactured based on specifications shown in Table 1.

Comparative examples and embodiments were different with respect to only the resin material used for the tire framework member 2, the resin material used for the ground contacting tread component 3, and the tread thickness ratio X2/X1.

The ratio X2/X1 was adjusted by changing the thickness tb of the ground contacting tread component 3.

For the comparative examples and embodiments, the ground contacting areas of the tires when contacted with a road surface vertically under conditions of a normal rim (15x6JJ), a normal internal pressure (230kPa) and a normal load (3.43kN), were calculated by computer simulating, and they were compared with each other.

### < Ground contacting area >

It is an indicator of the grip, and is indicated by an index with the comparative example 1 as 10.

The larger the value, the wider the ground contacting area and the better the grip performance.

**[Table 1]**

| | comparative example 1 | comparative example 2 | comparative example 3 | embodiment 1 | embodiment 2 | embodiment 3 | embodiment 4 | embodiment 5 | embodiment 6 | embodiment 7 | embodiment 8 |
|---|---|---|---|---|---|---|---|---|---|---|---|
| X2/X1 | 1 | 1.2 | 5 | 1.3 | 1.5 | 2 | 4 | 4.5 | 2 | 2 | 2 |
| resin material for ground contacting tread component | A | A | A | A | A | A | A | A | B | A | B |
| resin material for tire framework member | C | C | C | C | C | C | C | C | C | D | D |
| ground contacting area | 10 | 10 | 9 | 12 | 13 | 14 | 12 | 11 | 14 | 14 | 14 |

The resin materials used in Table 1 are shown in Table 2.

**[Table 2]**

| resin material | name | manufacturer | tensile elastic modulus (Mpa) | type |
|---|---|---|---|---|
| A | Elastolan C60A1OWN | BASF | 8.3 | polyurethane-based thermoplastic elastomer |
| B | Clayton G1641 | Clayton Polymer | 16.59 | styrene-based thermoplastic elastomer |
| C | UBESTA XPA 9040 | Ube Industries | 60.7 | polyamide-based thermoplastic elastomer |
| D | Hytrel 4767N | Toray DuPont | 68.4 | polyester-based thermoplastic elastomer |

As shown in Table 1, it can be confirmed that, in the embodiments, the ground contacting area was increased and the grip performance was improved while ensuring excellent recyclability.

## Claims

1. A pneumatic tire comprising
a toroidal tire framework member comprising a pair of bead portions, a pair of sidewall portions, and an under tread portion connecting the pair of sidewall portions, and
a ground contacting tread component disposed outside the under tread portion in the tire radial direction, wherein
the tire framework member and the ground contacting tread component are made of a resin material,
a tensile elastic modulus of the ground contacting tread component is smaller than a tensile elastic modulus of the tire framework member, and
with respect to a tread thickness between the inner surface in the tire radial direction, of the under tread portion and the outer surface in the tire radial direction, of the ground contacting tread component, the tread thickness X2 at a tread edge is more than 1.2 times and less than 5.0 times the tread thickness X1 at the tire equator.

2. The pneumatic tire as set forth in claim 1, wherein the tread thickness gradually increases from the tire equator to the tread edge.

3. The pneumatic tire as set forth in claim 1 or 2, wherein the entire inner surface in the tire radial direction, of the ground contacting tread component is arranged so as to contact with the outer surface in the tire radial direction, of the under tread portion.

4. The pneumatic tire as set forth in any one of claims 1 to 3, wherein the resin material is a thermoplastic elastomer.

5. The pneumatic tire as set forth in any one of claims 1 to 4, wherein the tensile elastic modulus of the tire framework member is 60 to 200 MPa.

6. The pneumatic tire as set forth in any one of claims 1 to 5, wherein the tensile elastic modulus of the tire framework member is 100 to 170 MPa.

7. The pneumatic tire as set forth in any one of claims 1 to 6, wherein the tread thickness X2 is not less than 1.3 times the tread thickness X1.

8. The pneumatic tire as set forth in any one of claims 1 to 6, wherein the tread thickness X2 is not more than 4.5 times the tread thickness X1.

9. The pneumatic tire as set forth in any one of claims 1 to 8, wherein a thickness of the ground contacting tread component is not less than 1.0 times a thickness of the under tread portion.
